# EUROPEAN PATENT APPLICATION

(11) **EP 3 920 115 A1**
(43) Date of publication of application: **08.12.2021**
(21) Application number: 20177851.1
(22) Date of filing: 02.06.2020
(51) Int. Cl.: G06Q 10/08

(54) **METHOD AND SYSTEM FOR ENABLING TO STORE GENEALOGICALLY RELATED DATA WITHIN A BLOCKCHAIN NETWORK**

(71) Applicant: Siemens Aktiengesellschaft, 80333 München (DE)
(72) Inventor: SASSETTI, Andrea, Chicago, IL 60614 (US); ORCHARD, Alastair, 16146 Genova (GE) (IT); GUERRASIO, Corradino, 16167 Genua (IT)
(74) Representative: Siemens Patent Attorneys

(57) **Abstract**

A method and a system for enabling to store genealogically related data within a blockchain network, said network being configured to generate one or more blockchains; the invention comprising enabling a data structure of a transaction of a given blockchain to comprise a data field, hereinafter called genealogical data field, said genealogical data field being configured to comprise a set of directed links to one or more other blockchains foreseen to be in a genealogical relationship with the given blockchain.

## Description

The invention relates to a method and a system for enabling to store genealogically related data within a blockchain network according to the preamble of claims 1 and 8 respectively.

In supply chain management systems, blockchain technologies are used for tracking and tracing of products in an automatic, fast and secure manner.

In fact, the distributed and secure nature of the blockchain lends itself extremely well to the traceability of products across multiple stakeholders e.g. from farm to fork.

Therefore, tracking solutions based on blockchain technologies are widely deployed by many of the largest international manufacturing, retailing and logistics companies.

Their blockchain implementation typically start from the moment that a final item is produced and marked with an identifier so that companies are able to track their packages along the supply chain.

However, most product recalls occur due to problems with raw materials or production mistakes, and, unfortunately, it is often the case that the producer is forced to rely on semi-manual searches throughout its production records.

In fact, it is noted that the ledger at the heart of current blockchain technologies records a linear sequence of transactions. This linear nature of the sequence is derived from its origins aimed at tracking transactions between two actors and it is built into the storage mechanisms of the blockchain.

Unfortunately, the linearity of the ledger precludes the usage of the blockchain technology for tracking a transaction where more than two actors are involved.

Particularly, in the production field, transactions of manufacturing operations may often include more than two actors.

In the production field, it is often the case that MOM data structures make use of family tree or genealogy structures for hierarchically modeling manufacturing processes within relational databases. Examples include data structures modeling the assembly or transformation of several "parent" parts or ingredients into a single child, or the disassembly or transformation of a single parent into several "children" parts.

As seen, tracking and tracing of items within manufacturing processes is desirably done with genealogical data models, which enable to store many-to-one and/or one-to-many relationships between entities. Unfortunately, such genealogical data models cannot be stored within the core ledger of a blockchain.

Therefore, current blockchain techniques for tracking and tracing of genealogically related items of industrial operations are a mixed of automatic and manual operations and are distributed, cumbersome, tedious, error-prone and otherwise ill-suited for the task.

It is therefore the aim of the present invention to overcome the above mentioned drawbacks, in particular by providing a method and system for enabling to store genealogically related data within a blockchain network.

The aforementioned aim is achieved by a method and a system for enabling to store genealogically related data within a blockchain network, said network being configured to generate one or more blockchains; comprising enabling a data structure of a transaction of a given blockchain to comprise a data field, hereinafter called genealogical data field, said genealogical data field being configured to comprise a set of directed links to one or more other blockchains foreseen to be in a genealogical relationship with the given blockchain.

In embodiments, a directed link may be a forward link connecting the given blockchain to a child blockchain or a backward link connecting the given blockchain to a parent blockchain.

Embodiments may preferably comprise for a specific blockchain, receiving a request for a transaction in which the genealogical data field comprises a directed link connecting to a pre-existing blockchain; and, for the pre-existing blockchain, generating a transaction which adds, within its genealogical data field, a new reciprocally directed link connecting to the specific blockchain.

Conveniently, embodiments may further comprise receiving external blockchain data on an external blockchain belonging to an external blockchain network different than said network, the latter hereinafter called local network; generating a local placeholder blockchain comprising the external blockchain data; for a specific blockchain of the local network, receiving a request for a transaction in which the genealogical data field comprises a directed link connecting to the local placeholder blockchain; and, for the placeholder blockchain, generating a transaction which adds, within its own genealogical data field, a new reciprocally directed link connecting to the specific blockchain.

In embodiments, the genealogical data field may further comprise for each directed link a link type characterizing the directed link. Examples of link type may include, but not limited, by one or more of the following types: transportation type; transformation type; containment type; movement type; link direction type; external chain type; label type.

Embodiments may preferably comprise receiving a tracking request for a specific blockchain, wherein said specific blockchain is in a relationship with a related blockchain via a corresponding directed link; and, extending the received tracking request by generating a tracking request for the related blockchain.

It is provided a method and a system to enable a GUI screen to display a graphical representation of genealogically related data stored within a blockchain network in accordance with embodiments, by providing graphical controls to enable to expand and/or to collapse one of more graphical representations of genealogically linked blockchains upon receiving a corresponding input of a user interaction.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

Embodiments enable to implement a structured meta data model within a blockchain ledger.

Embodiments enable to store family tree relationship information and data in a blockchain.

Embodiments enable to store a genealogical relationship among items within the core ledger of a blockchain.

Embodiments enable a blockchain ledger to store a genealogy of relationships among linear chains.

Embodiments enable to store genealogical data models within the core ledger of a blockchain.

Embodiments enable the use of blockchain technology for storing inter-chains genealogy information.

Embodiments enable to implement a MOM genealogical data model within a blockchain ledger.

Embodiments enable building smart contracts of blockchain technologies capable of recording a genealogy of items.

Embodiments enable automatic, efficient and fast track & trace of transactions and of actions via blockchain applications associated with a product lifecycle.

Embodiments provide an efficient solution to the macro problem of product tracking and tracing between the many stakeholders in a supply chain.

Embodiments enable both forward and back tracing of a location of an item in a fast manner.

Embodiments enable applying blockchain to tracing assets throughout production processes.

Embodiments enable use of blockchain technology for non-linear genealogical item tracking by analyzing their meta-data tagging.

Embodiments enable storing genealogically related data in a secure manner thanks to the security level proper of blockchain technology.

The invention will now be described in preferred but not exclusive embodiments with reference to the accompanying drawings, wherein:
Figure 1 is a flowchart schematically illustrating blockchain transactions involving directed links in accordance with disclosed embodiments.
Figure 2A-2D is a table comprising a code extract of a smart contract involving directed links in accordance with disclosed embodiments.
Figure 3 is a block diagram schematically illustrating genealogically related blockchains within a GUI screen in accordance with disclosed embodiments.
Figure 4 is a block diagram schematically illustrating a traceability graph within a GUI screen in accordance with disclosed embodiments.

At least some embodiments of the present invention address the above described issue in which a method and a system enable to store genealogically related data within a blockchain network.

In embodiments, the genealogically related data may conveniently describe data models for transactions or actions for items, physical or logical items, during their lifecycle or supply chain.

The blockchain network is configured to generate one or more blockchains.

With embodiments, a data structure of a transaction of a given blockchain is enabled to comprise a data field called genealogical data field. In embodiments, the genealogical data field is defined within transaction data fields of the given blockchain.

The genealogical data field is configured to comprise a set of directed links to one or more other blockchains foreseen to be genealogically related with the given blockchain. In embodiments, the genealogical data field may preferably be an optional data field.

In embodiments, the genealogical data field is a set of data fields. In embodiments, the set of genealogical data fields comprises other relevant data fields beside the set of directed links, like for example the link type as further explained below.

In embodiments, a link may be a chain identifier or a link to a chain identifier.

In embodiments, the genealogical data field comprises, for each linked chain, an attribute called "link-type" for characterizing the type of the link connecting to the specific chain. Examples of characterization attributes defined in the link type include, but are not limited by, transportation, transformation, containment, and a label providing descriptive information for human users.
In embodiments, the link type may advantageously provide link attributes for specializing the manner genealogical traceability searches are implemented when navigating the corresponding linked blockchains. For example, when the link type is set to "transformation", it indicates that the parent chain items are transformed into the items of the child chain; instead if the link type is set to "transportation", the parent chain items are not transformed and they can be traced independently from other parent items joining the child chain. In addition, when the link type is set to transportation, it indicates that item location may be changing, and GPS location data information is to be provided.
In embodiments, the link attribute type conveniently allow to implement traceability searches which are more finely tuned in their navigation along the supply chain.
For example if the link type of a specific chain item (e.g. such as a potato) to its child chain is characterized of being "transportation" type, this means that the item is not transformed, and it may for example be transported with other items (e.g. such as carrots and tomatoes) within the same transport vehicle and it is not mixed or transformed with such other items. Therefore, in the traceability search, the system advantageously tracks only the specific item by knowing that at a certain time the item potato will be downloaded from the vehicle without transformations. With such information, the system tracks only the potato item and ignores other non relevant transactions regarding the other items carrots and tomatoes.
In embodiments, the set of directed links may be an empty set.

With the term "directed" link is herein intended a link having a forward or backward direction. A forward directed link connects the given blockchain to a child blockchain and a backward directed link connects the given blockchain to a parent blockchain.

In embodiments, the direction of the link may be provided as one of the attributes in the link type. In other embodiments, two different types of link subsets exist, a forward link subset and a backward link subset.

In embodiments, for a specific blockchain, it is received a request for a transaction - e.g. a create or an update transaction - in which the genealogical data field comprises a directed link connecting to a pre-existing blockchain.

For the pre-existing blockchain, it is generating a transaction which adds, within its genealogical data field, a new reciprocally directed link connecting to the specific blockchain.

With the term "reciprocally" directed link it is herein intended a link having opposite direction with respect to the link connecting the specific blockchain to the pre-existing blockchain. For example, if the directed link connecting the specific blockchain to the pre-existing blockchain is a backward link, its reciprocally directed link is a forward link connecting the pre-existing blockchain to the specific blockchain.

In one embodiment, the reciprocal link is added in the same transaction.

In embodiments, the specular transaction adding the reciprocal link may be a separate transaction than the previously requested transaction.

In embodiments, the specular transaction, when newly created, has same transaction data except for the directed link which is reciprocal.

In embodiments, the two different transactions are grouped and committed together. In other embodiments, the requested transaction and the transaction adding the reciprocal link are the same transaction. In embodiments, the two transactions have the same transaction identifier.

Embodiments may advantageously be applicable to a plurality of different blockchain networks.

Conveniently, the specific blockchain and the pre-existing related blockchain may for example be two blockchains belonging to two different blockchain networks.

Embodiments may thus advantageously enable a hybrid architecture where blockchains belonging to other networks, for example to third party networks, may conveniently be linked to local blockchains of the local blockchain network by being referenced via a placeholder local blockchain containing external blockchain data relative to the external blockchain of the an external network. Examples of external blockchain data include, but are not limited by, address information, external blockchain identifier, name of the external network, blockchain content data, data univocally identifying the external blockchain network and/or any data providing relevant information on the external blockchain. In embodiments, the content data type of the external blockchain data depends on the manner the external and the blockchain networks are integrated.

In embodiments, the local chain acting as placeholder chain for the given external blockchain may already be present or shall be generated upon need of connecting to the given external blockchain by a local blockchain the local network.

In other words, the placeholder chain may be seen as a local blockchain with external blockchain data referencing to the external chain in the transaction data fields.

Upon need, a plurality of placeholder blockchains may conveniently be generated for each external linked blockchain of one or more additional networks.

In embodiments, access to one other additional blockchain networks is provided in addition to said blockchain network, respectively called second and first networks. The second network comprises at least one other blockchain herein called external blockchain.

In embodiments, a presence of an external blockchain of an additional network is signaled by defining an additional data field indicating the presence of external blockchains of additional networks. The additional data field may be the like type data field or another ad hoc defined data field.

In embodiments, this may be implemented by having transaction data fields referencing the external blockchain and a specific external "ChainType" data, which can be "external chain" or similar, to denote an external chain and to distinguish it from a local chain. In other embodiments, the external "ChainType" data may be signaled by means of the link type.

Embodiments may advantageously enable to generate of a "meta" and "non-linear" blockchain connecting several linear internal and/or external blockchains in a genealogy tree.

In embodiments, the above mentioned given blockchain is part of a blockchain network capable of generating at least two blockchains and wherein network transactions and their data field are defined and regulated by smart contracts which are pieces of code storable in the blockchain network.

In embodiments, transaction data of the smart contracts include a genealogical data field for linking at least two blockchains belonging to the same or to two different networks.

Embodiments are carried out with a blockchain engine capable of storing two or more chains within the same network. Examples of multi-blockchain engines include, but are not limited by, Hyperledger and Multichaindb.

Embodiments advantageously enable generating a structured family tree by linking a plurality of linear blockchains.

In an exemplary embodiment, assume a production operation combines a lot of salt Lot_S and a lot of water Lot_W to generate a lot of brine Lot_B. In the system, the lot of salt Lot_S is represented by an existing blockchain or chain Chain_S and the lot of water Lot_W is represented by an existing chain Chain_W.

In embodiments, a smart contract generates a new blockchain Chain_B to represent the brine with a directed link to the unique identifier of both chains Chain_S, Chain_W. A corresponding reverse link relation is created in the parent chains Chain_S and Chain_W.

In embodiments, they are created by executing a custom smart contract.

It is noted that the interchain links even if they are created without using the standard inbuilt linear linking mechanisms between transactions within a single chain, they do however advantageously retain the same encryption levels of the standard data model, therefore guaranteeing the data integrity of the end-to-end stored genealogy.

Embodiments conveniently include a query mechanism able to iterate back along the network of chain relations, for example in order to find which raw material lots were used to produce a final material.

In embodiments, a tracking function may be implemented within the smart contract.

Examples of implementable tracking functions include a forward search, a backward search and a composite search.

For example, a "forward" search may start tracking from a raw material lot with a given initial chain id, by following any forward chain id present in the initial chain and iterate the search by following any linked forward chain and providing as a result all the found "final" states, meaning all the leaves or last transactions of such chains without any further link.

Advantageously, thanks to the presence of the reverse relationships, embodiments may enable also forward tracing, for example in order to identify the current location of all material lots containing a particular raw material or coming from a particular location.

In an exemplary algorithm embodiment, assume that a user adds a transaction to a chain called chain "A" and in such a transaction the user desires to link the chain "A" to two pre-existing chains, chains "B" and "C".

The user specifies in the transaction proposal for "A" the direction of each link to the linked chain, e.g. "forward" for chain "B" and "backward" for chain "C".

With embodiments, chain identifiers "B" and "C" are added to the corresponding transaction field link arrays, by performing the following algorithm steps:
s1) in the transaction proposal for chain "A", chain "B" is added to transaction field array "LinkForward";
s2) in the transaction proposal for chain "A", chain "C" is added to transaction field array "LinkBackward";
s3) the transaction proposal for chain "A" is sent to the blockchain;
s4) in the blockchain contract, during "A" transaction proposal, chains "B" and "C" are validated for existence, otherwise the transaction is rejected;
s5) in the same chain "A" transaction context, chain "B" last status is retrieved and a new transaction proposal for "B" is created, adding "A" to transaction field array "LinkBackward" among other transaction data;
s6) in the same chain "A" transaction context, chain "C" last status is retrieved and a new transaction proposal for "C" is created adding "A" to transaction field array "LinkForward" among other transaction data.
Advantageously, at steps s6) and s7), the "reciprocal" navigation links are automatically added. With the terms "reciprocal navigational link", "reciprocal link" and/or "reciprocally directed link" it is intended the opposite link, e.g. the link directed to chain "A" in chain "B" and in chain "C".

With embodiments, by having directed links in both directions, the traceability search is advantageously enabled in both directions, starting from any connected chain.

In the above described exemplary embodiment, two linked chains are added in a new transaction operation, the skilled person easily appreciates that, in other embodiments, there is no limit to the number of linked chains that is possible to add in one or more new transaction operations.

In the above described exemplary embodiment, two linked chains are added in a new transaction operation, the skilled person easily appreciates that, in other embodiments, more than two linked chains may be added in one or more new transaction operations.

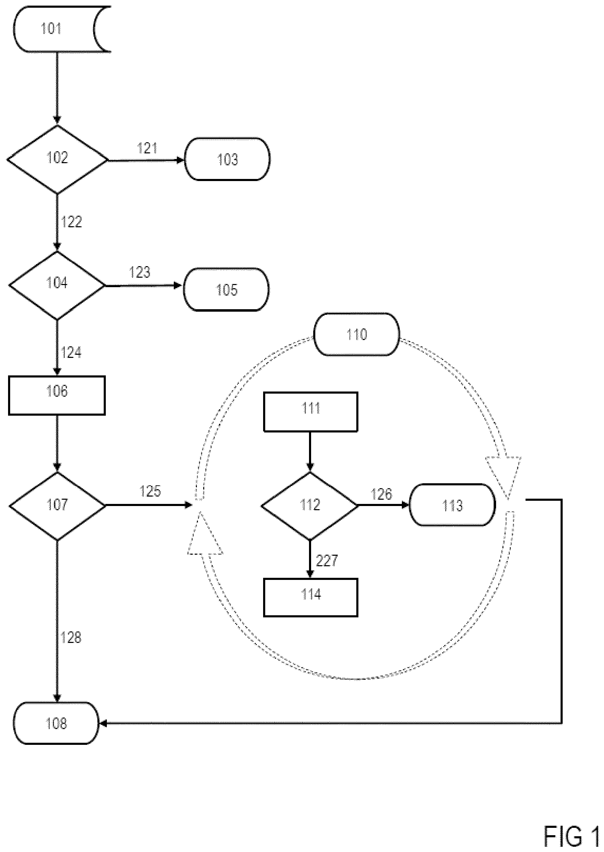

Figure 1 is a flowchart schematically illustrating blockchain transactions involving directed links in accordance with disclosed embodiments.

The flowchart describes generally the creation or addition of a new transaction, with or without links, for a new (create case) or existing chain.

At step 101, a system comprising at least a processor and a memory receives a request for a blockchain transaction to create/update an entity on chain id.

At step 102, the system checks whether the parameters are valid or not. If the parameters are invalid 121, the system will stop processing the request and fails the user request.

If the parameters are valid 122, at step 104, the system retrieves the current ChainID state and checks whether the state is valid or not. If the state is invalid 123, the system will stop processing the request and fails the user request 105.

If the state is valid 124, the system creates/updates 204 the entity structure.

At step 106, the system checks 107 whether one or more LinkForward/LinkBackward are present. If no link is available 128, transactions are "committed" at the end of the method if no error occurred before 208.

If there are N available links 125, the system executes the loop 110 for N times for each LinkForward/LinkBackward. The loop 110 includes the steps 111-114.

At step 111, the system retrieves the linked chain id current state. At step 112, the system checks whether the retrieved state is valid. If the retrieved state is invalid 126, the system will stop processing the request and fails the user request 113.

If the retrieved state is valid 127, the system updates 114 the entity with a reciprocal link in the opposite direction.

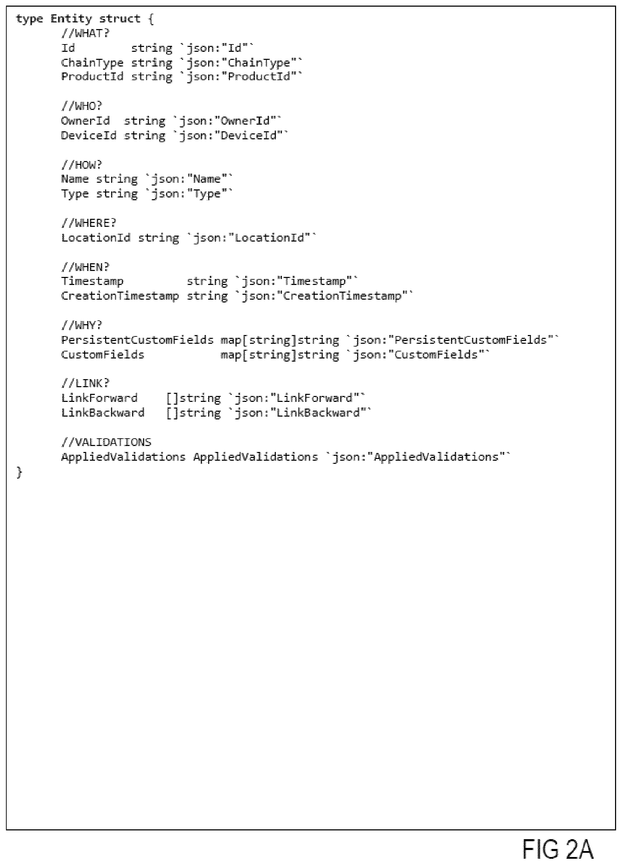

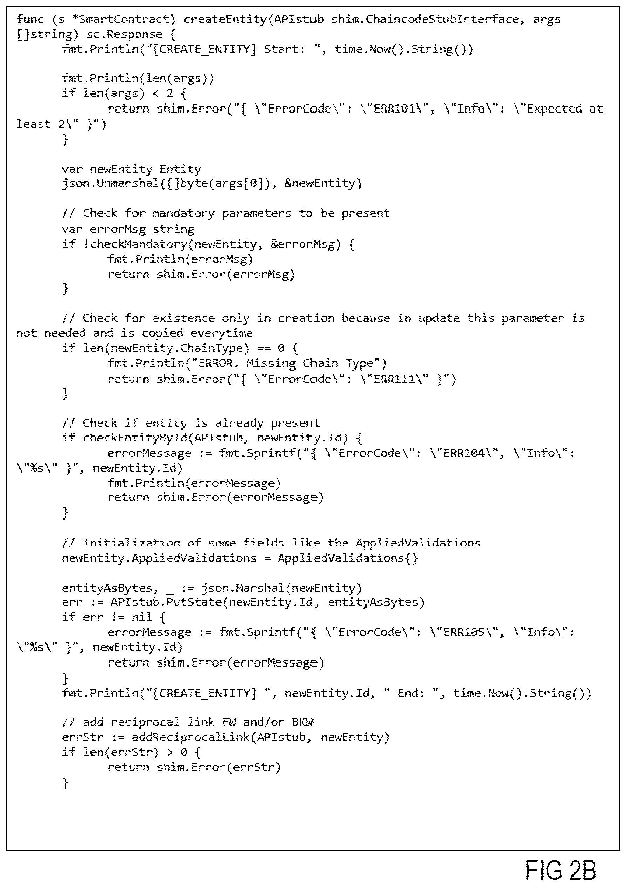

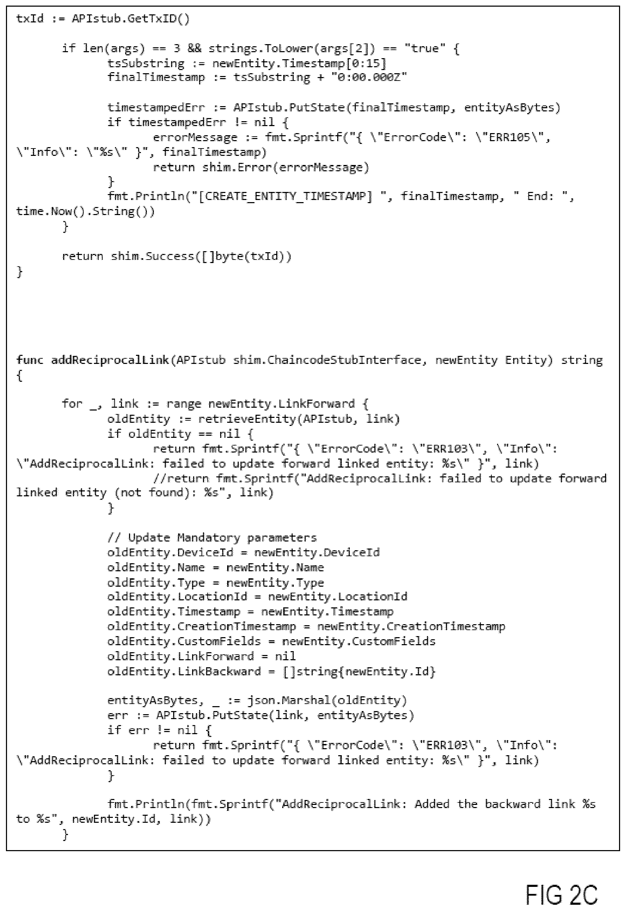

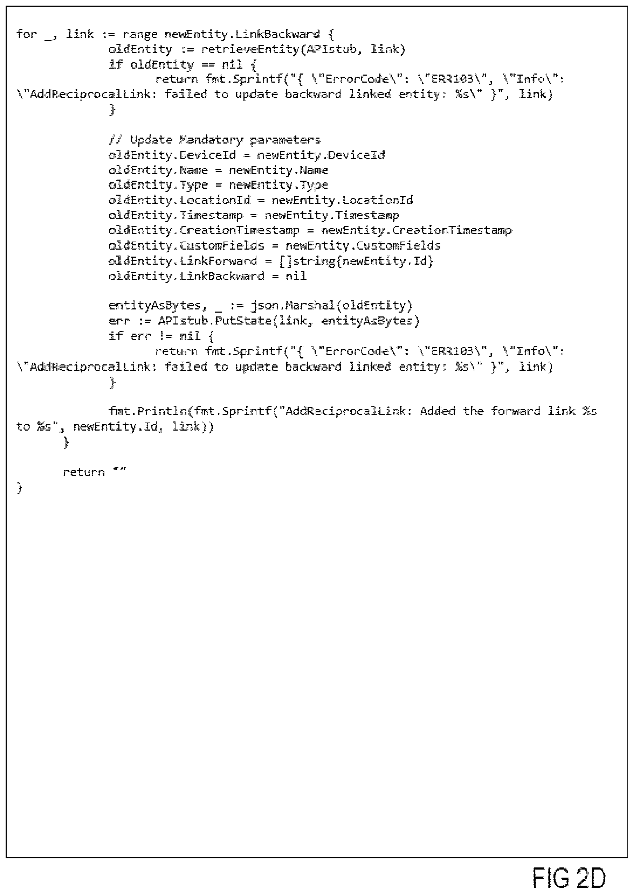

Figure 2A-2D is a table comprising a code extract of a smart contract involving directed links in accordance with disclosed embodiments.
The code extract of Figure 2 is written in Google "GO" language which is one of the Hyperledger supported language for smart contracts. It is noted that the code shown in Figure 2 is only an extracted portion of an implementable code; whereby some other code portions have been removed for the sake of conciseness and readability.

The shown code portion of smart contract comprises the following three parts:
- part I) definition of type "Entity" data structure in Figure 2A;
- part II) "createEntity()" function in Figure 2B-C;
- part III) "addReciprocalLink()" function in Figure 2C-D;

In embodiments, as defined in Part I), the data structure "Entity" is the transaction data structure of a blockchain. In embodiments, the Entity data structure comprises a plurality of data with custom attributes that categorize the information as for example as for example: WHAT?, WHO?, HOW?, WHERE?, WHEN?, WHY?, LINK?..
Table 1 below is an exemplary embodiment of transaction data fields of a blockchain.

**Table 1: exemplary embodiment of blockchain transaction data**

| **Category** | **Transaction data Fields** | **Description** |
|---|---|---|
| **WHAT?** | Id | unique s/n chain identifier |
| | ChainType | identifier for the type of chain (set only once on entity creation) |
| | ProductID | e.g. SKU, GTIN product |
| | ProductName, | |
| | ProductType, | |
| | ProductDescription | |
| **WHO?** | OwnerId | unique owner name/Id; previously registered in the blockchain in a separate look-up chain, e.g. it can be the GS1 GTIN owner number |
| | DeviceId | unique device Id; previously registered in the blockchain in a separate look-up chain and assigned to an OwnerId |
| | OwnerName, | |
| | OwnerDescription, | |
| | DeviceName, | |
| | DeviceDescription | |
| **HOW?** | Name | transaction name/id |
| | Type | type of transaction, e.g. "Material consumption" |
| | Description | Transaction description |
| **WHERE?** | LocationId -> | GS1 GLN e.g. 4562785465189 or other Id |
| | LocationName, | |
| | LocationDescription | |
| | Latitude, Longitude | e.g. 44.4056N, 08.9463E |
| | | |
| | AssetId, AssetName, | |
| | AssetDescription | |
| **WHEN?** | Timestamp | UTC, ISO format; it is provided by the data source |
| | CreationTimestamp | UTC, ISO format; it is the commit timestamp and is set automatically by blockchain API |
| | StartTimestamp | Start timestamp referred e.g. to IoT time range of the asset |
| | StopTimestamp | Stop timestamp referred e.g. to IoT time range of the asset |
| **WHY?** | PersistentCustomFields | Collection (name, value) of persistent custom fields, copied/updated to each new transaction |
| | CustomFields | Collection (name, value) of custom attributes, specific to transaction |
| **LINK?** | LinkBackward | List of unique Id - backward chain identifier(s) |
| | LinkForward | List of unique Id - forward chain identifier(s) |
| | Documents | List of unique document Id |

In embodiments, some of the elements and/or custom attributes are mandatory in each transaction.

Examples of mandatory elements may include, but are not limited by, Id, ChainType, ProductID (in WHAT?); OwnerId, Device Id (in WHO?); Name, Type (in HOW?); LocationID (in WHERE?); Timestamp, CreationTimeStamp (in WHEN? elements). In embodiments, other elements may be optional while their name may be reserved so that the backend or UI logic can look for it e.g. Longitude, Latitude for a map.

In embodiments, each time a new transaction is added to a chain, the previous state is copied (i.e. persistent custom fields) and updated, with the exception of the links collection, which belongs to specific transactions in the chain history.

In embodiments, optional attributes, e.g. ProductName, are physically stored in the custom fields collections, with the exception of the 2 links that have separate collections. In embodiments, document links can be saved in the persistent or transaction custom fields collection.
In embodiments, documents may be considered as any other chain: a new chain, with a unique id which is the document id , e.g. name and revision). In transaction data, in a custom field it is possible to add a "body" item with the file body. Advantageously, a document is stored in a secure way within a blockchain, where each transaction of the document chain can be a new revision of it and by providing a link we associate that document to another chain, e.g. an organic certification doc" to a chain of a final organic product.

In embodiments, the createEntity() function of part II) of the code portion is an entry point for creating a new chain, e.g. a first block on a new chain Id.

In embodiments, the createEntity() function of part III) of the code portion the addReciprocalLink() function is where the system creates the new transaction block in the linked chain with reciprocal (opposite direction) link, called by createEntity().
With embodiments, the system automatically generates one or more specular transactions in order to create the reciprocal links for the one or more related chains.

In embodiments, each blockchain records transactions, actions or events taking place for a specific item, whereby an item may be a physical item or a logical item. Examples of physical and logical items represented by a blockchain, include, but are not limited by: products, material lots, production orders, logistical orders.

In embodiments, transaction item data may for example comprise custom attribute data specifying e.g. the creation time, the description, links to documents certifying environment regulations, the and a field for storing a set of genealogical links

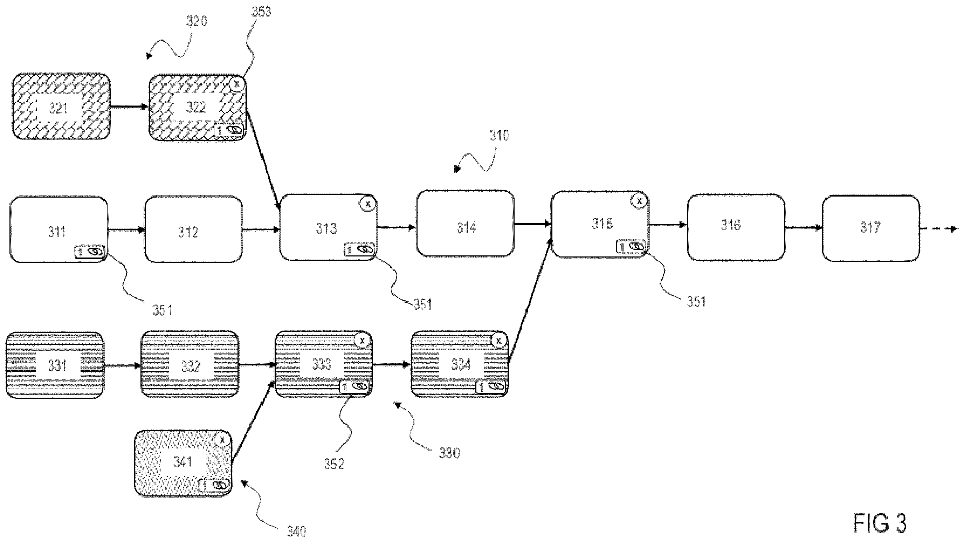

Figure 3 is a block diagram schematically illustrating genealogically related blockchains within a GUI screen in accordance with disclosed embodiments.

Assume that the GUI screen of Figure 3 shows an exemplary simplified embodiment of a graphical blockchain representation of an extended supply chain for the production of potato chips.

In this exemplary embodiment, the following four different genealogically interconnected blockchains 310, 320, 330, 340 are shown: the potato chips chain 310, the frying oil chain 320, the flavoring chain 330 and the salting chain 340.

Each single blockchain 310, 220, 230, 240 has the same chain ID and is graphically represented with a chain of blocks marked by the same texture pattern filling. In other GUI screen embodiments, each different single blockchain may preferably be distinguishable by using color markings.

The potato chips blockchain 310 includes the following seven transactions 311-317: creating peeled potato lot 311, slicing potatoes 312, dosing frying oil 313, frying & drying 314, flavoring 315, packing 316, shipping 317.

Transactions after shipping are not shown, they may for example include transactions for loading chips for distribution, transporting, unloading chips packages by supermarket 1.

The frying oil blockchain 320 includes the following two transactions 321,322: creating frying oil lot 321, dosing frying oil 322.

The flavoring blockchain 330 includes the following four transactions 331-334: creating flavor lot 331, dosing flavor 332, salting 333, flavoring 334.

The salting blockchain 340 includes the following transaction 341: salting 341.

Within the potato chips chain 310, there are three transaction blocks 311,313, 315 having a backward link to another chain 320, 330. Therefore, blockchain 310 is genealogically interconnected with blockchains 320, 330. In embodiments, the presence of one or more links to another chain may conveniently be indicated with a chain symbol 351. The number of indicated chains may preferably be indicated with a number adjacent to the chain symbol 351.

Assume that, in the GUI screen, only the potato chip chain 310 be shown. By clicking or selecting on of the three chains symbols of this chain, the user can expand the linked chains frying oil and flavoring 320, 330 and conveniently view and explore the interchain genealogical relationships. Once the flavoring chain is expanded 330, the user can further expand within this chain 330 another linked chain 340 by clicking on the chain symbol 352. In case the user wishes to collapse the expanded chain 320, she/he is able to do so by clicking on the closing symbol 353. For example, there is a chain connected to the block 311 which is not shown in the GUI screen because the user has not selected its chain symbol 351 yet.

In embodiments, the directed links may be generated during a request of creating the transaction or during a request of updating the transaction. In embodiments, the reciprocal links are automatically generated with a generation of a specular transaction. For example, the flavoring block 334 is the specular block of the flavoring block 315, comprising the reciprocal forward link, linking the flavoring chain 330 to the potato chip chain 340. In embodiments, the data of the flavoring transaction 334 replicates the data of the transactions 315 excepts for the directed link which is reciprocal to the directed link of the specular transaction.

In embodiments, by inserting a transaction block with a backwards/forwards link to another chain, the system automatically creates a specular transaction block with a reciprocally directed link, forwards/backwards. In embodiments, the smart contract foresees the generation of a specular transaction.

In embodiments, each blockchain is identifiable via its own chain identifier and comprises at least one transaction with a set of links to chain identifiers for linking itself to one or more child or parent chains.

In embodiments, the salting chain 340 may represent a placeholder chain 341 to an external chain of another network, for example the third party blockchain network of the salting producer. For example, the external salting chain (not shown) may comprise three transactions like creating salt lot, dosing salt and salting.

In embodiments, also the external chain may conveniently be displayed in the GUI screen, starting from external blockchain data stored in the local placeholder blockchain, for example by being provided access to the external blockchain network and/or by using third party available APIs or UIs.

In embodiments, a GUI is provided to manage the interaction between a computer system and a user through graphical elements such as windows on a display, configured to enable to display graphical representations of genealogically connected blockchains and containing graphical controls to enable to expand and/or to collapse one of more blockchain graphical representations by receiving inputs of user interactions with graphical symbols such as for example a chain icon or a [x] close button.

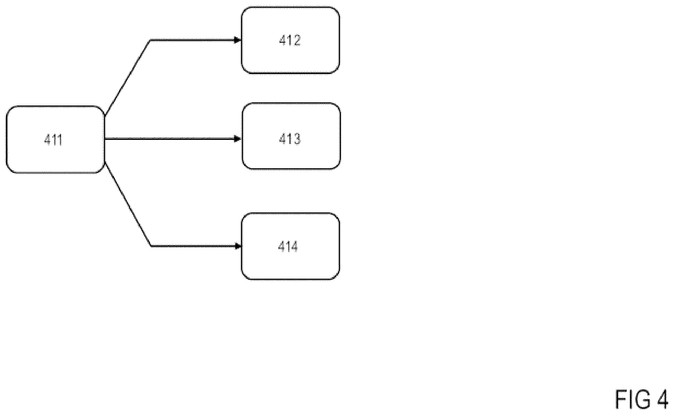

Figure 4 is a block diagram schematically illustrating a traceability graph within a GUI screen in accordance with disclosed embodiments.

With embodiments, when receiving a tracking request for a specific blockchain, the tracking request is extended to comprise also a tracking request to at least one other blockchain connected to this specific blockchain as shown with a traceability graph example of Figure 4, which may e.g. refer to some of the interconnected chains of Figure 3.

In this exemplary embodiment, the diagram block 411 represents potato field lots having certain identification numbers, the other three connected blocks 412, 413, 414 represent the field locations where items deriving from that given identification number are found albeit in a transformed state e.g. as potato chips in supermarket A 412 and in supermarket B 413, and as raw potato in silos A 414. The user, by inputting a potato field lot with a certain identifier, is advantageously informed how many corresponding potato chips items or raw potato lots are present in each relevant locations, e.g. there are for example two potato chips in supermarket A, two potato chips in supermarket B and three raw potato lots in silos 1.

It is noted that in the supermarket, it is not the potato field lot, but a final product like the potato chips that have been produced using potatoes coming from the original field. Conveniently, the tracking algorithm, by following the directed linked chains, is able to start from the potato field lot and go through several other linked chains, like transportation order chains, processing chains, distribution chains and ending with a "last" transaction in the supermarket that is tracing that the delivered final product has been sold. Similarly, it is for the raw potato lots that are still in the silos which is their "last" transaction. It is noted that from one potato field lot could be originated several raw potatoes lots going to the factories for processing or inventories or to the silos.
Advantageously, in embodiments, a user can perform a forward track and trace search by inputting the identifier of a certain potato field lot and receive as output the last known locations of potato chips from this potato field lot and the corresponding quantities. Blocks 412, 413, 414 represent the potato chips and raw potato lots last known status/location by navigating the intermediate production steps with the interconnected blockchains in accordance with example embodiments. Advantageously, the blocks 412, 413, 414 may also include also quantity information on the tracked potato chips or raw potato lots.

In embodiments, a user can perform a backward trace search by inputting the identifier of a certain damaged potato chip and receive as output the corresponding potato field lot.

In embodiments, the system receives as input data one or more identifier of raw material lots 411 -e.g. three identifiers of three potato field lots -and then through the search mechanism it provides as output all the involved forward branches with the last known locations 412, 413, 414 of the requested items -e.g. silos A, market A, market B

In another query example, the user may for example be aware that some specific potato chips sold in supermarket A 412 have a defect, with the tracking mechanism the system enables to backwardly trace the origin of the potato chips until to the field potato lots of origin with its identifier 411. The system may then automatically forward trace, based on the found potato field identifier, to find out that potato chips or the raw potato lots deriving from the same damaged potato chip lot on other final locations like market B 413 and silos A 414.

The skilled in the art easily appreciates that, in other embodiments, the results of the performed traceability searches may be provided in other formats than the block formats shown in Figure 4. For example, in embodiments, the results may for example be displayed in a textual or tabular way, e.g. via tables or in other preferred descriptive formats.
Embodiments conveniently enable to track & trace in each desired direction a variety of items like for example final products, raw materials, ingredients, order operations, manufacturing operations, packaging operations, bottling operations, logistics operations, shipping operations, transportation operations and any other relevant product lifecycle operations.

In embodiments, the traceability searches are performed by taking into account the attributes of the "link type", e.g. by specifying how to track a chain item in a different manner in the case the link type is "container" where items exit in an unchanged status, than in the other case the link type is "transformation" where items undergo a change of their initial status, for example by being heated and mixed with other items.

Embodiments conveniently enable to connect two or more genealogically related blockchains for example one blockchain of the final product logistics and one blockchain of the raw material supply chain. In embodiments, the raw material blockchain may be further expanded in another genealogy of interconnected blockchains. The skilled in the art easily appreciate that, with embodiments, a search tool based on the interconnected blockchains may prove to be an extremely powerful tool with a lot of applications and several technical benefits.

Embodiments includes a query mechanism able to iterate back along the network of chain relations, e.g. in order to find which raw material lots were used to produce a final material. Embodiments enable traceability search in both directions, starting from any connected chain.

Embodiments of a test system refer to a scenario of a customer requiring tracing beer cases when found a problem of quality within the glass of the beer bottles. In a test, the production records of 1,200 beer cases were fed into solution embodiments and a forward trace was performed in order to identify the current location of each beer case. With embodiments, the search was completed within 10 seconds, whereby with traditional techniques the same search would have most probably taken between 8 and 30 hours.

It is noted than in recall situations, time is an important factor not only for cost issues but also for health issues. Each year about 400,000 people die after having consumed contaminated products.

Embodiments have been described for the production of food and beverage goods, the skilled in the art easily appreciated that embodiments may apply to any vertical industry where the supply chain contains production operations and where recalls are frequent and/or expensive, as for example in the automotive industry.

In embodiments, a system may comprise at least a processor and a memory and receives a request for a transaction or action for a product or an item. Said system is typically connected to other devices or systems in order to form a network for exchanging information with respect to the lifecycle of the product or the item.

Examples of transactions or actions include, but are not limited by, a movement of the product or the item from a supplier to a given retailer, an action applied to the product, like its mixture with another product, or its heating within a specific range of temperatures, etc.

In embodiments, a data source for creating transactions may be a MOM system. In embodiments, a specific edge device running an application may preferably provide additional context information for the blockchain transaction data.

In embodiments, the action or transaction involves the product and the realization of the action or transaction changes a status of the product, for instance from in stock to sold, or from not heated to heated. Preferably, such product status change may be signaled with a "link type" attribute.

The request might be automatically sent by a system, and comprises transaction data and customized validation rules.

The customized validation rules are preferentially automatically created by said system, from data recording and representing a change of the status of the product occurring during its lifecycle.

In embodiments, a system to record transactions on a distributed network may comprise one or more of the following:
- a distributed network to which a proposed transaction is submitted;
- a device for cryptographically hashing the submitted transactions based on a cryptographic algorithm; and
- another device for verifying the hashed transaction; and
- one or more repository for recording the verified transaction.

In embodiments, a method may further conveniently include one or more of the following steps:
- recording a transaction on a distributed network;
- submitting a transaction to a distributed network;
- providing a cryptographic algorithm to hash a submitted transaction;
- cryptographically hashing a transaction based on the provided algorithm;
- verifying the hashed transactions;
- recording a verified transaction in one or more repository.

Embodiments may be implemented in a large variety of different systems with various architectures and with different types of actors, with direct or indirect access to one or more blockchain networks.
In a first scenario embodiment, a first main blockchain network may for example be owned by a producing company and this producing company provides to its business partners - e.g. like. Suppliers and logistical companies - direct access to the main network so that they can directly access the main network with their own nodes and their blockchains and securely record their own relevant transactions.

In a second scenario embodiment, transaction data from business partners may be recorded indirectly via the producing company which receives the transaction data from its business partners and then records the transactions within the blockchain network for them.
In a third scenario embodiment, the business partners use their own secure blockchain network, external to the first local network, and provide to the producing company the relevant information to create the placeholder chains linking to their own external blockchains.
The first and the third scenario embodiments are preferred embodiments since they guarantee data integrity to the actors. In fact, with such embodiments, the actors have control of a reliable recording of their own transaction data within a blockchain network.

The skilled in the art easily appreciates that other scenario embodiments may advantageously be foreseen whereby with a mixed combination of direct access and direct/indirect recording of transaction data in one or more blockchain network by the actor companies of a supply chain.
In embodiments, a consortium of actor companies may access directly or indirectly a first blockchain network.

In other embodiments, some of the actors of the consortium may have their own different blockchain network and their recorded transactions and blockchains may advantageously be encapsulated as placeholder blockchain within the first blockchain network.

In other scenarios, embodiments may be implemented as a service in a cloud.

In other embodiments, access to the main blockchain network may be provided as software as a service ("Saas").

In embodiments, the SaaS implementation may be particularly convenient given the cross-domain nature of the resulting traceability solution.

In example embodiments, actors may also be final customers who scan a bar code of a given product and are then able to trace the product supply chain by expanding the traceability graph to verify a sustainability quality level.
Embodiments enable a blockchain network to act as an ecosystem of a plurality of linear blockchains ruled by a smart contract which foresee the definition of data field comprising a link set to a set of linear blockchains. In embodiments, the ecosystem may use same repositories and a same smart contract.

In embodiments, also third party proprietary blockchains which are ruled by another blockchain network with another smart contract may interconnected to the first network of blockchains via placeholder blockchains.

## Claims

1. A method for enabling to store genealogically related data within a blockchain network, said network being configured to generate one or more blockchains; the method comprising the following step:
- enabling a data structure of a transaction of a given blockchain to comprise a data field, hereinafter called genealogical data field, said genealogical data field being configured to comprise a set of directed links to one or more other blockchains foreseen to be in a genealogical relationship with the given blockchain.

2. The method of claim 1, where a directed link is a forward link connecting the given blockchain to a child blockchain or a backward link connecting the given blockchain to a parent blockchain.

3. The method of claim 1 or 2, further comprising the following steps:
- for a specific blockchain, receiving a request for a transaction in which the genealogical data field comprises a directed link connecting to a pre-existing blockchain; and,
- for the pre-existing blockchain, generating a transaction which adds, within its genealogical data field, a new reciprocally directed link connecting to the specific blockchain.

4. The method of claim 1 or 2, further comprising the following steps:
- receiving external blockchain data on an external blockchain belonging to an external blockchain network different than said network, the latter hereinafter called local network;
- generating a local placeholder blockchain comprising the external blockchain data;
- for a specific blockchain of the local network, receiving a request for a transaction in which the genealogical data field comprises a directed link connecting to the local placeholder blockchain; and,
- for the placeholder blockchain, generating a transaction which adds, within its own genealogical data field, a new reciprocally directed link connecting to the specific blockchain.

5. The method of any of the previous claims, wherein the genealogical data field further comprises for each directed link a link type characterizing the directed link, selected from the group consisting of one or more of the following:
- transportation type;
- transformation type;
- containment type;
- movement type;
- link direction type;
- external chain type;
- label type.

6. The method of any of the previous claims, further comprising the following steps:
- receiving a tracking request for a specific blockchain, wherein said specific blockchain is in a relationship with a related blockchain via a corresponding directed link;
- extending the received tracking request by generating a tracking request for the related blockchain.

7. A method to enable a GUI screen to display a graphical representation of genealogically related data within a blockchain network, whereby data storing is enabled with any of the claims 1 to 5, further comprising:
- providing graphical controls to enable to expand and/or to collapse one of more graphical representations of genealogically linked blockchains upon receiving a corresponding input of a user interaction.

8. A data processing system for enabling to store genealogically related data within a blockchain network, comprising:
a processor, and an accessible memory, the data processing system particularly configured to execute the steps according to any of the claims 1 to 7.
